# EUROPÄISCHE PATENTSCHRIFT

(11) **EP 3 398 840 B1**
(45) Veröffentlichungstag und Bekanntmachung des Hinweises auf die Patenterteilung: **11.03.2020**
(21) Anmeldenummer: 18169200.5
(22) Anmeldetag: 25.04.2018
(51) Int. Cl.: B62D 25/20, B60N 2/015, B60N 2/68, B60R 22/18, B62D 21/02, B62D 27/02

(54) **VORRICHTUNG ZUR ANORDNUNG EINES PERSONENRÜCKHALTESYSTEMS IN EINEM FAHRZEUG**
DEVICE FOR ARRANGING A PASSENGER RETENTION SYSTEM IN A VEHICLE
DISPOSITIF DESTINÉ À AGENCER UN SYSTÈME DE RETENUE DES PERSONNES DANS UN VÉHICULE

(30) Priorität: 03.05.2017 DE 102017109466
(43) Veröffentlichungstag der Anmeldung: 07.11.2018
(73) Patentinhaber: Aguti Produktentwicklung & Design GmbH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- EP-A1- 0 765 252
- EP-A1- 0 928 717
- DE-A1- 4 333 463
- DE-U1- 9 308 942

## Beschreibung

### Stand der Technik

Vorrichtungen zur Anordnung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar. Die DE 43 33 463 A1 zeigt eine Vorrichtung zur Anordnung eines Personenrückhaltesystems in einem Fahrzeug mit den Merkmalen des Oberbegriffs des Anspruchs 1.

### Aufgabe und Vorteile der Erfindung

Aufgabe der vorliegenden Erfindung ist es, eine Vorrichtung der einleitend beschriebenen Art bzw. eine Personensitzanordnung für ein Fahrzeug technisch und wirtschaftlich vorteilhaft bereitzustellen. Insbesondere sollen Stabilitätskriterien sicher und herstellungstechnisch vorteilhaft erfüllbar sein.

Diese Aufgabe wird durch die unabhängigen Ansprüche gelöst.

In den abhängigen Ansprüchen werden vorteilhafte und zweckmäßige Weiterbildungen der Erfindung genannt.

Die Erfindung geht von einer Vorrichtung zur Anordnung eines Personenrückhaltesystems in einem Fahrzeug aus, um mit dem Personenrückhaltesystem eine in dem Fahrzeug sitzende Person zu sichern, wobei die Vorrichtung eine Stützanordnung mit mindestens einer Vertikalstütze und mindestens einer Querstrebe umfasst, und wobei im angeordneten Zustand der Stützanordnung am Fahrzeug die Vertikalstütze aufrecht stehend an einem Fahrzeugboden des Fahrzeugs angeordnet ist. Die Vorrichtung ist vorteilhafterweise als Gurtgestell für einen Fahrzeugsitz oder eine Fahrzeugsitzbank ausgebildet.

Vorteilhafterweise ist die Querstrebe als eine längliche Querstrebe ausgebildet. Beispielsweise ist die Querstrebe an der Vertikalstütze aufgenommen und winklig zur Vertikalstütze ausgerichtet. Die Stützanordnung umfasst vorteilhafterweise zwei, insbesondere drei Vertikalstützen, wobei die Vertikalstützen beispielsweise voneinander beabstandete vorhanden sind. Bevorzugterweise verbindet die insbesondere horizontal ausgerichtete Querstrebe die mehreren Vertikalstützen miteinander. Die Vertikalstützen sind vorteilhafterweise voneinander lateral bzw. seitlich bzw. horizontal beabstandet vorhanden. Gegebenenfalls kann im Fußbereich der Vertikalstützen eine Verbindung der Vertikalstützen miteinander vorhanden sein, z.B. durch eine Querstrebe, über welche z.B. eine Fixierung am Bodenbereich des Fahrzeugs z.B. am Fahrzeugboden und/oder an der Fahrzeugstruktur einrichtbar ist.

Eine Querstrebe ist vorzugsweise durchgehend ausgebildet und steht bevorzugterweise an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein insbesondere lateraler Abstand von insbesondere zwei Vertikalstützen.

Eine solche Stützanordnung ist insbesondere als Einbauvorrichtung in der Art eines rahmenartigen Gestells ausgebildet, umfassend Freilassungen, die von parallel und winklig zueinander ausgerichteten, miteinander verbundenen, insbesondere länglichen Profilen umrahmt sind. Die Profile bestehen vorzugsweise aus einem metallischen Material.

Beispielsweise umfasst die Stützanordnung auch Anbringmittel zur Anbringung der Stützanordnung an einen Fahrzeugboden des Fahrzeugs. Die Stützanordnung ist vorzugsweise dazu ausgelegt und ausgebildet in dem Fahrzeug beziehungsweise in einem Kraftfahrzeug an einem Bodenabschnitt des Fahrzeugs befestigt zu werden. Bevorzugterweise sind die Anbringmittel dazu ausgebildet die Stützanordnung lösbar oder unlösbar fixierbar am Fahrzeugboden anzubringen. Z.B. ist die Stützanordnung durch die Anbringmittel im angeordneten Zustand am Fahrzeug an den Fahrzeugboden angeschraubt, angenietet und/oder angeschweißt. Die Anbringmittel der Stützanordnung zur Anbringung an den Fahrzeugboden des Fahrzeugs sind beispielsweise am Fußbereich der Stützanordnung ausgebildet.

Das Fahrzeug ist z.B. als ein Automobil, als ein Autobus, als ein Wohnmobil oder auch als ein Camping-Mobil ausgebildet. Die Stützanordnung bildet vorteilhafterweise eine Grundstruktur für eine Sitzanordnung im Fahrzeug, beziehungsweise für eine Fahrzeugsitzanordnung.

Ein Personen-Rückhaltesystem ist vorteilhafterweise als eine Sicherheitsgurtanordnung, z.B. als ein Mehrpunktgurt-Sicherheitssystem oder als ein Dreipunktgurt-Sicherheitssystem ausgebildet. An der Stützanordnung ist vorzugsweise eine Komponente des Personen-Rückhaltesystems anbringbar. Eine derartige Komponente ist z.B. als ein Gurtaufroller, eine Gurtumlenkanordnung zur Richtungsänderung des daran vorbeigeführten Gurts, eine Fixierung eines Gurtendes und/oder als ein Gurtschloss, an dem ein Einsteckteil lösbar einrastbar ist, mit welchem der Gurt als Schlaufe ausziehbar ist, vorhanden.

Die vorgeschlagene Stützanordnung muss konstruktiv bzw. mechanisch so ausgelegt sein, einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können.

Dies ist Voraussetzung zur Erhaltung der Sicherheit einer Person, welche mit einer Sicherheitsgurtanordnung sicherbar ist, wobei die Sicherheitsgurtanordnung an der im Fahrzeug fixierten Stützanordnung aufgenommen ist, z.B. samt Elementen eines entsprechenden Personensitzes. Die Vorrichtung ist demgemäß vorzugsweise so ausgestaltet, eine innere Gerüststruktur eines fest im Fahrzeug installierten Personensitzes zu bilden.

Für eine vergleichsweise höhere Stabilität der Vorrichtung, z.B. für eine erweiterte Einsatzmöglichkeit auf einen Personensitz mit zwei oder mehr Sitzplätzen, kann die Stützanordnung zum Beispiel genau zwei oder genau drei parallele z.B. voneinander beabstandete Vertikalstützen umfassen, wobei die Vertikalstützen vorzugsweise identisch aufgebaut sind. Beide Vertikalstützen sind bevorzugt mit einer horizontal angeordneten Querstrebe verbunden.

Bei einer typischen erfindungsgemäßen Stützanordnung mit zwei oder drei senkrecht im Fahrzeug aufstellbaren Vertikalstützen und einer horizontal gerichteten Querstrebe beträgt die Länge der Vertikalstützen bzw. die Höhe der Stützanordnung im montierten Zustand etwa 1,1 Meter bis ca. 1,3 Meter, wobei die Vertikalstützten, insbesondere die beiden äußeren Vertikalstützen, über einen Abstand von z.B. ca. 0,3 bis 0,4 Meter voneinander seitlich beabstandet vorhanden sind. Eine Länge der Querstrebe liegt bevorzugterweise bei ca. 0,7 bis 0,9 Meter.

Die Vertikalstütze und/oder die Querstrebe ist vorteilhafterweise als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 bis 40 Millimeter. Eine Wanddicke des Hohlprofils liegt in der Regel in einem einstelligen Millimeterbereich. Denkbar ist auch, dass das Hohlprofil als ein Mehrfachhohlprofil vorhanden ist.

Des Weiteren ist es vorstellbar, dass das Hohlprofil, insbesondere die Vertikalstütze, eine Materialausnehmung z.B. eine Schlitzung aufweist, welche als Soll-Biegestelle im Belastungsfall der angeordneten Vorrichtung, z.B. in einem Crashfall des Fahrzeugs ausgebildet ist. Damit ist ein plastisches Verformungsverhalten der Vertikalstütze in einem Belastungsfall beeinflussbar, insbesondere vorgebbar. Vorteilhafterweise erstreckt sich die Ausnehmung an der Vertikalstützte insbesondere in horizontaler Richtung über eine Vorderseite der Vertikalstütze und über zumindest einen an die Vorderseite anschließenden seitlichen Bereich der Vertikalstütze. Insbesondere erstreckt sich die Materialausnehmung abschnittsweise auf der Vorderseite und auf zwei seitlich an die Vorderseite anschließende sich gegenüberliegende seitliche Bereiche der Vertikalstütze. Die Vorderseite ist bezogen auf einen Anbringzustand der Stützanordnung im Fahrzeug zu verstehen.

Ein mit der Vorrichtung bildbarer Fahrzeug- bzw. Personensitz weist demgemäß eine Sitzstruktur mit einer Sitzfläche auf, welche sich an der Vorderseite des Personensitzes und damit an der Vorderseite der Stützstruktur bzw. der Vorderseite der Vertikalstütze und/oder einer Vorderseite der Querstrebe befindet, wobei die Vorderseite der Vertikalstütze und die Vorderseite der Querstrebe vorteilhafterweise in Fahrtrichtung ausgerichtet ist.

Im eingebauten Zustand der Vorrichtung im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrtrichtung an der Stützanordnung wirksam.

Ein wesentlicher Aspekt der Erfindung ist nun darin zu sehen, dass die Vorrichtung ein Befestigungselement umfasst, wobei im angeordneten Zustand am Fahrzeug das Befestigungselement einen Träger, insbesondere einen Längsträger, eines Fahrzeugrahmes des Fahrzeugs zumindest seitlich und unten umgreift, sodass im angeordneten Zustand der Stützanordnung am Fahrzeug das Befestigungselement anliegend an der Stützanordnung, insbesondere anliegend an der Vertikalstütze und/oder anliegend an der Querstrebe, befestigt ist, wobei die Stützanordnung, insbesondere die Vertikalstütze, durch das Befestigungselement an dem Fahrzeugrahmen des Fahrzeugs gehalten ist und wobei im angeordneten Zustand der Stützanordnung am Fahrzeug das Befestigungselement ausgehend vom Träger des Fahrzeugrahmens den Fahrzeugboden des Fahrzeugs fortlaufend durchgreift. Hierdurch ist die Vorrichtung vergleichsweise kostengünstig herzustellen und vergleichsweise einfach zu montieren.

Bevorzugterweise ist die Vorrichtung derart vorhanden und am Fahrzeug anordenbar, dass zur Befestigung der Stützanordnung am Fahrzeugrahmen, insbesondere der Vertikalstütze am Fahrzeugrahmen, insbesondere am Längsträger des Fahrzeugrahmens, ausschließlich das Befestigungselement den Fahrzeugboden durchgreift. Das Befestigungselement ist vorteilhafterweise einstückig vorhanden, insbesondere aus einem einzigen Material hergestellt. Bevorzugterweise weist das Befestigungselement keine Trennstelle auf. Beispielsweise entspricht eine Kontur des Befestigungselements im Fußbodendurchgangsbereich, insbesondere eine Außenkontur des Befestigungselements im Fußbodendurchgangsbereich, einer Kontur des Befestigungselements im Umgreifungsbereich oder Umschlingungsbereich des Trägers des Fahrzeugrahmens, insbesondere einer Außenkontur des Befestigungselements. Die Kontur des Befestigungselements, insbesondere die Außenkontur des Befestigungselements, verläuft vorteilhafterweise über einen überwiegende Strecke, insbesondere durchgehend entlang einer Längserstreckung des Befestigungselements. Bevorzugterweise durchgreift das Befestigungselement den Fahrzeugboden zweimal fortlaufend, insbesondere entlang seiner Längserstreckung. Beispielsweise durchgreift das Befestigungselement den Fahrzeugboden mit Durchgreifungsbereichen des Befestigungselements. Denkbar ist, dass die beiden Durchgreifungsbereiche des Befestigungselementes entlang der Längsachse des Befestigungselements voneinander beabstandet ausgebildet sind. In einem Zwischenbereich des Befestigungselements zwischen den beiden Durchgreifungsbereichen des Befestigungselements entlang der Längsachse umschlingt das Befestigungselement vorteilhafterweise den Träger des Fahrzeugrahmens.

Bevorzugterweise ist im angeordneten Zustand der Stützanordnung am Fahrzeug die Stützanordnung, insbesondere die Vertikalstütze am Fahrzeugboden befestigt, insbesondere fixiert, z.B. angeschraubt, angeklebt, angeschweißt und/oder angenietet. Vorteilhafterweise durchgreifen oder durchdringen die Anbringmittel, mittels welchen die Stützanordnung im angeordneten Zustand im Fahrzeug am Fahrzeugboden befestigt ist, den Fahrzeugboden des Fahrzeugs nicht, insbesondere nicht vollständig. Bevorzugterweise sind die Anbringmittel derart ausgebildet, dass die Stützanordnung im Fahrzeugboden insbesondere ausschließlich gegen ein Verrutschen positioniert ist. Die Anbringmittel sind vorteilhafterweise nicht dazu vorgesehen, im Crashfall die Stützanordnung bspw. am Fahrzeugboden und/oder am Fahrzeugrahmen zu halten.

Von Vorteil erweist sich auch, dass das Befestigungselement bandartig ausgebildet ist. Dadurch ist das Befestigungselement vergleichsweise kostengünstig und flexibel ausgebildet.

Das Befestigungselement ist beispielsweise streifenartig vorhanden. Das Befestigungselement ist zum Beispiel als ein insbesondere flexibler Metallstreifen und/oder als ein insbesondere flexibles Metallband ausgebildet. Denkbar ist auch, dass das Befestigungselement als ein Gurtband, ein Zugband und/oder als ein Gewebeband vorhanden ist. Vorteilhafterweise ist das Befestigungselement dazu ausgebildet Kräfte aufzunehmen und weiterzuleiten, welche in Richtung der Längserstreckung am Befestigungselement angreifen. Beispielsweise ist das Befestigungselement dazu vorgesehen Zugkräfte aufzunehmen.

Bevorzugterweise ist das Befestigungselement als flexibles Zugelement, z.B. als biegeschlaffes Zugelement vorhanden. Beispielsweise ist das Befestigungselement als tuchartig, z.B. als ein Tuch, netzartig, z.B. als ein Netz und/oder gewebeartig ausgebildet. Das Befestigungselement besitzt bspw. eine Dreiecksform oder eine Rautenform und/oder eine Trapezform. Das Befestigungselement ist z.B. aus Metall, aus Stoff und/oder Kunststoff hergestellt.

Zum Beispiel ist das Befestigungselement im angeordneten Zustand der Stützanordnung am Fahrzeug flächig anliegend, insbesondere entlang einer Längserstreckung des Befestigungselements, an der Vertikalstütze und/oder der Querstrebe vorhanden.

Vorstellbar ist auch, dass das Befestigungselement rohrartig, z.B. als gebogenes Rohr ausgebildet ist. Das Befestigungselement kann z.B. als ein Rohr mit einem runden oder ovalen Querschnitt vorhanden sein. Denkbar ist auch, dass das Rohr als Vierkantrohr bzw. Vierkantstahl vorhanden ist.

Beispielsweise greift das Befestigungselement im angeordneten Zustand in einen Hohlraum der Vertikalstütze ein, insbesondere von unten. Im angeordneten Zustand an der Stützstruktur ist ein Endbereich des Befestigungselements zum Beispiel parallel verlaufend zu einer Längsachse der Vertikalstütze vorhanden. Insbesondere ist das Befestigungselement mit der Längsachse, insbesondere mit einer Längsachse des Endbereichs, im angeordneten Zustand an der Stützstruktur parallel zur Längsachse der Vertikalstütze vorhanden.

In einer vorteilhaften Ausgestaltung der Vorrichtung ist im angeordneten Zustand am Fahrzeug das Befestigungselement U-förmig vorhanden. Hierdurch besitzt das Befestigungselement eine vorteilhafte Form, um den Träger des Fahrzeugrahmens zu umgreifen. Beispielsweise besitzt das U-förmige Befestigungselement an einem offenen Ende des U's einen Durchgreifungsbereich, insbesondere besitzt das Befestigungselement an beiden offenen Enden des U's jeweils einen Durchgreifungsbereich. Vorstellbar ist auch, dass im angeordneten Zustand am Fahrzeug das Befestigungselement V-förmig ausgebildet ist und insbesondere genau eine Biegung und/oder einen Biegungsbereich oder genau eine Krümmung aufweist. Beispielsweise ist die Krümmung kreisförmig oder elliptisch ausgeformt.

Vorteilhafterweise umfasst das Befestigungselement im angeordneten Zustand am Fahrzeug genau zwei Biegungen und/oder zwei Biegungsbereiche, z.B. genau drei Biegungen und/oder genau drei Biegungsbereiche, insbesondere genau vier Biegungen und/oder genau vier Biegungsbereiche. Wobei die Biegungen und/oder die Biegungsbereiche vorteilhafterweise einen Biegewinkel größer 75°, insbesondere größer oder gleich 90° aufweisen.

Außerdem erweist es sich von Vorteil, dass im angeordneten Zustand am Fahrzeug das Befestigungselement schlaufenartig vorhanden ist.

Vorteilhafterweise umschließt das Befestigungselement im angeordneten Zustand der Stützanordnung am Fahrzeug den Längsträger des Fahrzeugrahmens zumindest seitlich und unten schlaufenartig. Denkbar ist auch, dass das Befestigungselement im angeordneten Zustand der Stützanordnung am Fahrzeug den Längsträger des Fahrzeugrahmens umschließt, z.B. schlaufenförmig oder ringförmig, insbesondere vollständig umschließt. Beispielsweise umschließt das Befestigungselement den Träger des Fahrzeugrahmens seitlich, insbesondere an beiden Seiten, sowie oben und unten.

Denkbar ist auch, dass im angeordneten Zustand der Stützanordnung am Fahrzeug das Befestigungselement lassoartig vorhanden ist. Zum Beispiel ist das Befestigungselement in der Form eines Lassos vorhanden und umschließt z.B. mit einer Schlinge des Lassos den Längsträger des Fahrzeugrahmens im angeordneten Zustand. Weiter ist es vorstellbar, dass im angeordneten Zustand der Stützanordnung am Fahrzeug das Befestigungselement derart an der Stützanordnung und am Fahrzeugrahmen vorhanden ist, dass in einem Belastungsfall, zum Beispiel in einem Crashfall des Fahrzeugs, eine Schlinge des Befestigungselements, welche den Längsträger des Fahrzeugrahmens umschließt, z.B. des Lassos, sich anzieht, bzw. sich zuzieht, bzw. sich verengt.

Als Vorteil erweist sich auch, dass insbesondere im angeordneten Zustand der Stützanordnung am Fahrzeug das Befestigungselement mit einem Ende, insbesondere mit zwei Enden, an der Vertikalstütze und/oder der Querstrebe der Stützanordnung befestigt ist.

Vorteilhafterweise sind die beiden Enden des Befestigungselements entlang einer Längsachse des Befestigungselements beabstandet voneinander und sich gegenüberliegend am Befestigungselement vorhanden. Bevorzugterweise ist im angeordneten Zustand der Stützanordnung am Fahrzeug das Befestigungselement insbesondere unlösbar an der Vertikalstütze und/oder der Querstrebe fixiert. Das Befestigungselement ist z.B. mit der Vertikalstütze und/oder mit der Querstrebe verschraubt, vernietet, verklebt und/oder verschweißt.

Überdies erweist es sich von Vorteil, dass insbesondere im angeordneten Zustand der Stützanordnung am Fahrzeug das Befestigungselement an einer Seitenfläche oder an zwei Seitenflächen der Vertikalstütze angeordnet ist, wobei die Seitenflächen der Vertikalstütze sich im angeordneten Zustand der Stützanordnung am Fahrzeug parallel zu einer Fahrtrichtung des Fahrzeugs erstrecken. Die beiden Seitenflächen der Vertikalstütze, an welchen das Befestigungselement im angeordneten Zustand der Stützanordnung am Fahrzeug angeordnet ist, sind vorteilhafterweise voneinander beabstandet und sich gegenüberliegend an der Vertikalstütze vorhanden.

In einer vorteilhaften Modifikation der Vorrichtung weist die Stützanordnung zwei oder mehr Vertikalstützen auf und insbesondere im angeordneten Zustand der Stützanordnung am Fahrzeug ist das Befestigungselement mit einem ersten Ende an einer ersten Vertikalstütze und mit einem zweiten Ende an einer zweiten Vertikalstütze angeordnet.

Bevorzugterweise ist das Befestigungselement im angeordneten Zustand an der Stützanordnung mit einem Ende jeweils an einer äußeren Vertikalstütze der Stützanordnung befestigt. Beispielsweise ist das Befestigungselement im angeordneten Zustand an der Stützanordnung an zwei voneinander beabstandeten äußeren Vertikalstützen der Stützanordnung befestigt.

Weiter wird vorgeschlagen, dass im angeordneten Zustand der Stützanordnung am Fahrzeug das Befestigungselement mit einem Ende an der Querstrebe der Stützanordnung angeordnet ist, wobei die Querstrebe in vertikaler Richtung gesehen, senkrecht zu einer Erstreckung des Fahrzeugbodens des Fahrzeugs, unterhalb einer Montagestelle der Stützanordnung an einer oder mehreren Vertikalstützen befestigt ist, wobei die Montagestelle zur Anordnung einer Komponente des Personenrückhaltesystems vorgesehen ist. Hierdurch ist ein Kraftangriffspunkt der Stützanordnung am Befestigungselement vorteilhaft vorhanden. Denkbar ist, dass das Befestigungselement in Fahrtrichtung gesehen hinter Anbringmittel der Stützanordnung verlaufend am Fahrzeug angeordnet ist. Hierdurch ist eine Drehbewegung der Stützanordnung im Crashfall vermindert.

Überdies erweist es sich von Vorteil, dass Spannmittel vorhanden sind, um im angeordneten Zustand der Stützanordnung am Fahrzeug die Stützanordnung über das Befestigungselement mit dem Fahrzeugrahmen zu verspannen.

Vorteilhafterweise umfassten das Befestigungselement die Spannmittel. Ein Spannmittel ist beispielsweise als ein Gurtspanner ausgebildet. Vorteilhafterweise ist die Vorrichtung in einer Weise vorhanden, dass im angeordneten Zustand der Vorrichtung am Fahrzeug durch die Spannmittel und insbesondere durch das Befestigungselement die Stützanordnung in einer Richtung senkrecht zu einer Erstreckung des Fahrzeugbodens nach unten in Richtung Fahrzeugrahmen aufstehend auf dem Fahrzeugboden an den Fahrzeugboden angezogen ist.

Von Vorteil erweist sich außerdem, dass die Stützanordnung ausgehend von einer Querstrebe und/oder einer Vertikalstütze einen nach vorne unten verlaufenden Stützfuß aufweist, z.B. schräg nach vorne unten, wobei der Stützfuß z.B. als Anbaueinheit ausgebildet ist, wobei der Stützfuß dazu ausgelegt ist, die Stützanordnung im angeordneten Zustand im Fahrzeug nach vorne unten auf dem Fahrzeugboden abzustützen, wobei die Stützanordnung ein Befestigungsorgan aufweist, welches im angeordneten Zustand der Vorrichtung am Fahrzeug den Stützfuß mit der verbleibenden Stützanordnung im Bereich des Fahrzeugbodens verbindet. Durch das Befestigungsorgan ist verhindert, dass ein horizontaler Abstand des Stützfuß zur Vertikalstütze parallel zum Fahrzeugboden sich verändert, insbesondere im Crashfall. Durch das Befestigungsorgan ist vorteilhaft ein Kräftedreieck zwischen Stützfuß, Vertikalstütze und Befestigungsorgan geschlossen.

Vorteilhafterweise ist das Befestigungsorgan bandartig vorhanden.

Durch eine bandartige Ausbildung des Befestigungsorgans, z.B. als Stahlband und/oder als Gurtband ist die Vorrichtung vergleichsweise kostengünstig und mit einem vergleichsweise geringen Gewicht herstellbar. Außerdem ist das Befestigungsorgan durch die bandartige Ausbildung vergleichsweise flexibel vorhanden und damit eine Montage bzw. Anbringung erleichtert bzw. verbessert.

Eine vorteilhafte Modifikation der Erfindung umfasst ein Fahrzeug mit einer Vorrichtung zur Anordnung eines Personenrückhaltesystems und/oder einem Fahrzeugsitz insbesondere mit einer Vorrichtung zur Anordnung eines Personenrückhaltesystems, wobei der Fahrzeugboden des Fahrzeugs eine schlitzartige Öffnung aufweist, durch welche das Befestigungselement und/oder das Befestigungsorgan im angeordneten Zustand hindurchgreift. Hierdurch ist eine Isolierung des Fahrzeugbodens optimiert.

Vorteilhafterweise ist das Befestigungselement im angeordneten Zustand am Fahrzeug durch die Öffnung hindurchgeführt vorhanden. Bevorzugterweise umfasst der Fahrzeugboden des Fahrzeugs zwei voneinander beabstandete Öffnungen, wobei das Befestigungselement durch beide Öffnungen hindurchgreifend vorhanden ist. Die Öffnungen sind vorteilhafterweise in einer Richtung senkrecht zu einer Längsachse des Längsträgers des Fahrzeugrahmens beabstandet voneinander vorhanden. Denkbar ist auch, dass das Befestigungselement mit beiden Enden eine einzige Öffnung des Fahrzeugbodens durchgreifend am Fahrzeug vorhanden ist. Vorteilhafterweise verschließt das Befestigungselement im angeordneten Zustand die Öffnung im Fahrzeugboden, welche es durchgreift, insbesondere vollständig.

Denkbar ist weiterhin, dass der Fahrzeugboden eine weitere insbesondere schlitzartige Öffnung für das Befestigungsorgan aufweist. Vorteilhafterweise durchgreift das Befestigungsorgan im angeordneten Zustand den Fahrzeugboden. Vorteilhafterweise verschließt das Befestigungsorgan im angeordneten Zustand die weitere Öffnung des Fahrzeugbodens, welche es durchgreift, insbesondere vollständig.

### Beschreibung der Ausführungsbeispiele

Mehrere Ausführungsbeispiele werden anhand der nachstehenden schematischen Zeichnungen unter Angabe von weiteren Einzelheiten und Vorteilen näher erläutert.

Es zeigen:
- Figur 1: eine seitliche Teilansicht auf ein Fahrzeuggrundgestell eines Fahrzeugs mit einem Fahrzeugrahmen, einem Fahrzeugboden und einer am Fahrzeug angeordneten erfindungsgemäßen Stützanordnung,
- Figur 2: eine perspektivische Teilansicht von schräg seitlich hinten oben auf die am Fahrzeug angeordnete Stützanordnung aus Figur 1 mit transparent dargestelltem Fahrzeugboden,
- Figur 3: eine Teildraufsicht auf einen Fahrzeugboden ohne angeordnete Stützanordnung, wobei der Fahrzeugboden dazu ausgebildet ist, um eine Stützanordnung nach Figur 1 anzuordnen,
- Figur 4: eine seitliche Teilansicht auf das Fahrzeuggrundgestell eines Fahrzeugs mit einem Fahrzeugrahmen, einem Fahrzeugboden und einer am Fahrzeug angeordneten weiteren Variante einer Stützanordnung,
- Figur 5: eine perspektivische Teilansicht von schräg seitlich hinten oben auf die angeordnete Stützanordnung aus Figur 4 mit transparent dargestelltem Fahrzeugboden und
- Figur 6: eine Teildraufsicht auf einen Fahrzeugboden ohne angeordnete Stützanordnung, wobei der Fahrzeugboden dazu ausgebildet ist, um eine Stützanordnung nach Figur 4 anzuordnen.

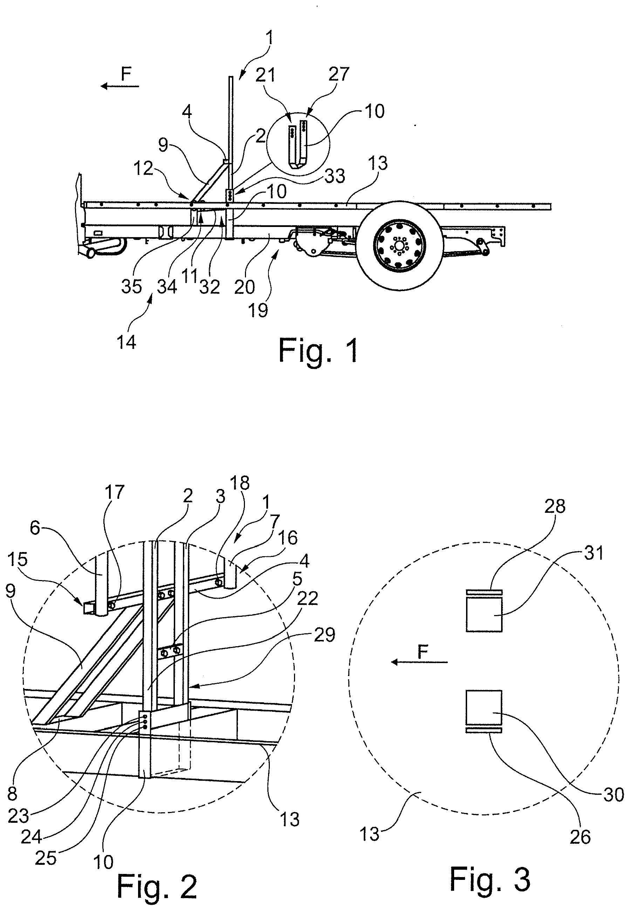

Eine Stützanordnung 1 umfasst z.B. unter anderem zwei Vertikalstützen 2, 3, eine erste Querstrebe 4, eine zweite Querstrebe 5, zwei Verbindungselemente 6, 7, ein Anbringmittel 8, einen Stützfuß 9, ein Befestigungselement 10, sowie ein Befestigungsorgan 11 (Figuren 1, 2, 4, 5).

Längsachsen der zwei Vertikalstützen 2, 3 sind im angeordneten Zustand an der Stützanordnung 1 vertikal ausgerichtet vorhanden. Die Vertikalstützen 2, 3 sind beabstandet voneinander und beispielsweise parallel zueinander nebeneinander vorhanden. Im Fußbereich 12 des Stützfuß 9 sind Anbringmittel 8 vorgesehen, um den Stützfuß 9 im angeordneten Zustand an einem Fahrzeugboden 13 eines Fahrzeugs 14 zu befestigen, zum Beispiel an den Fahrzeugboden 13 anzuschrauben. Vorteilhaft senkrecht zu den Vertikalstützen 2, 3 sind die Querstreben 4, 5 vorhanden und bevorzugterweise mit jeder der Vertikalstützen 2, 3 insbesondere unlösbar verbunden. Beispielsweise sind die Querstreben 4, 5 an die Vertikalstützen 2, 3 angeschweißt oder mit den Vertikalstützen 2, 3 verschraubt und/oder vernietet. Die erste Querstrebe 4 ist vorteilhafterweise etwa auf Höhe einer Sitzfläche eines Fahrzeugsitz an den Vertikalstützen 2, 3 befestigt, wobei der Fahrzeugsitz die Stützanordnung 1 umfasst. Insbesondere ist die erste Querstrebe 4 ausgehend vom Fahrzeugboden 13 in vertikaler Richtung nach oben auf Höhe eines Drittels einer Länge der Vertikalstützen 2, 3 ausgebildet.

Die Verbindungselemente 6, 7 sind beispielsweise bandartig vorhanden, z.B. als ein Stahlband. Die Verbindungselemente 7, 8 verbinden die erste Querstrebe 5 z.B. mit einer weiteren Querstrebe (nicht gezeigt) im Kopfbereich der Stützanordnung 1. Die Verbindungselemente 6, 7 sind bspw. parallel zu den Vertikalstützen 2, 3 ausgerichtet vorhanden und erstrecken sich z.B. in vertikaler Richtung.

Weiterhin sind an Enden 15, 16 der ersten Querstrebe 4 Anbringelemente in Form einer Befestigungsschraube 17, 18 ausgebildet. Mit den Befestigungsschrauben 17, 18 ist im angeordneten Zustand der Stützanordnung 1 am Fahrzeugsitz eine Sicherheitskomponente eines Personenrückhaltesystems befestigt, z.B. ein Gurtschloss (nicht dargestellt).

Das Fahrzeug 14 umfasst zum Beispiel einen Fahrzeugrahmen 19 mit einem Längsträger 20, an welchem in einer vertikalen Richtung nach oben beabstandet zum Längsträger 20 der Fahrzeugboden 13 angeordnet ist.

Im angeordneten Zustand am Fahrzeug 14 ist die Stützanordnung 1 mit den Vertikalstützen 2, 3 und dem Stützfuß 9 aufstehend auf dem Fahrzeugboden 13 vorhanden und beispielsweise mit dem Fahrzeugboden 13 verbunden, zum Beispiel verschraubt, insbesondere zur Positionierung der Stützanordnung 1 am Fahrzeugboden 13, zum Beispiel gegenüber einem horizontalen Verrutschen. Gegebenenfalls sind die Vertikalstützen 2, 3 der Stützanordnung 1 mit dem Fahrzeugboden 13 nicht verbunden, insbesondere nicht verschraubt.

Das Befestigungselement 10 ist im angeordneten Zustand der Stützanordnung 1 am Fahrzeug 14 mit einem ersten Ende 21 an einer Außenseite 22 der Vertikalstützen 2 zum Beispiel anliegend angeordnet und über Montageelemente 23 - 25, zum Beispiel einer Schraube und/oder einer Niet, fest, insbesondere unlösbar mit der Vertikalstütze 2 verbunden. Ausgehend vom ersten Ende 21 verläuft das Befestigungselement 10 entlang seiner Längsachse, insbesondere fortlaufend und durchgehend, nach unten, insbesondere in vertikaler Richtung, und durchdringt dabei den Fahrzeugboden 13 im Bereich eine Öffnung 26. Anschließend umgreift das Befestigungselement 10 in einer beispielsweise U-förmigen Weise den Längsträger 20 des Fahrzeugrahmens 19 an beiden Seiten des Längsträgers 20 seitlich und an der Unterseite des Längsträgers 20 unten. Weiter durchgreift das Befestigungselement 10, insbesondere fortlaufend und durchgehend, mit einem zweiten Ende 27 entlang der Längsachse nach oben verlaufenden, insbesondere in vertikaler Richtung nach oben verlaufen den Fahrzeugboden 19 im Bereich einer weiteren Öffnung 28. Das zweite Ende 27 des Befestigungselements 10 ist im angeordneten Zustand am Fahrzeug 14 und an der Stützanordnung 1 an einer Außenseite 29 der Vertikalstütze 3 fest, insbesondere unlösbar mit der Vertikalstütze 3 verbunden. Das Befestigungselement 10 ist somit vorteilhafterweise einstückig vorhanden.

In Figur 3 ist der Fahrzeugboden 13 in einer Teilansicht von oben dargestellt. Gezeigt ist ein sogenannter Footprint 30, 31 für die Vertikalstützen 2, 3 der Stützanordnung 1. Die Footprints 30, 31 bilden die Flächen am Fahrzeugboden 13, auf welchen die Vertikalstützen 2, 3 im angeordneten Zustand am Fahrzeugboden 13 aufstehend vorhanden sind. Weiter sind in Figur 3 die Öffnungen 26, 28 gezeigt, welche vorteilhafterweise schlitzartig bzw. schlitzförmig vorhanden sind. Hierdurch ist es möglich das Befestigungselement 10 entlang seiner Längsachse durch den Fahrzeugboden 13 hindurchzuführen bzw. hindurchzuschieben, wobei im angeordneten Zustand des Befestigungselements 10 am Fahrzeug 14 die Öffnungen 26, 28 das Befestigungselement 10 vorteilhafterweise anliegend umschließen, sodass eine thermische Isolierung des Fahrzeugbodens 13 vergleichsweise erhöht ist. Ist das Befestigungselement 10 in einer Weise vorhanden, dass es an den Außenseiten 22, 29 der Stützanordnung 1 befestigt ist, so sind die Öffnungen 26, 28 vorteilhafterweise in einer Ebene des Fahrzeugbodens 13 senkrecht zu einer Fahrtrichtung F des Fahrzeugs 14 seitlich versetzt zu den Footprints 30, 31 am Fahrzeugboden 13 vorhanden (Figur 3).

Um ein Kräftedreieck zwischen dem Stützfuß 9, den Vertikalstützen 2, 3 und dem Fahrzeugboden 13 zu schließen ist z.B. ein Befestigungsorgan 11 vorgesehen (Figur 1). Das Befestigungsorgan 11 ist beispielsweise mit einem ersten Ende 32 an einem Fußbereich 33 der Vertikalstützen 2, 3 mit der Stützanordnung 1 insbesondere unlösbar verbunden. Ausgehend vom ersten Ende 32 verläuft das Befestigungsorgan 11 im angeordneten Zustand am Fahrzeug 14 in Fahrtrichtung F entlang des Fahrzeugbodens 13. Denkbar ist, dass das Befestigungsorgan 11 auf dem Fahrzeugboden 13 aufliegen oder anliegend vorhanden ist. Wie in Figur 1 dargestellt kann das Befestigungsorgan 11 aber auch den Fahrzeugboden 13 durchgreifen, um unterhalb des Fahrzeugbodens 13 in Fahrtrichtung F entlang des Fahrzeugbodens 13 verlaufen vorhanden zu sein. Das Befestigungsorgan 11 ist mit einem zweiten Ende 34 mit dem Stützfuß 9 im Fußbereich 12 des Stützfuß 9 insbesondere unlösbar verbunden.

Im Fußbereich 12 des Stützfuß 9 ist der Fahrzeugboden 13 beispielsweise durch ein Stützorgan 35 auf dem Fahrzeugrahmen 19 bzw. dem Längsträger 20 des Fahrzeugs 14 abgestützt. Hierdurch sind Druckkräfte, welche insbesondere im Crashfall vorhanden sind, ausgehend vom Stützfuß 9 über den Fahrzeugboden 13 und das Stützorgan 35 auf den Fahrzeugrahmen 19 ableitbar. Das Befestigungsorgan 11 kann direkt mit dem Stützfuß 9 verbunden sein, oder beispielsweise indirekt über das Stützorgan 35. Denkbar ist, dass der Stützfuß 9 mit dem Stützorgan 35 im angeordneten Zustand insbesondere unlösbar verbunden ist.

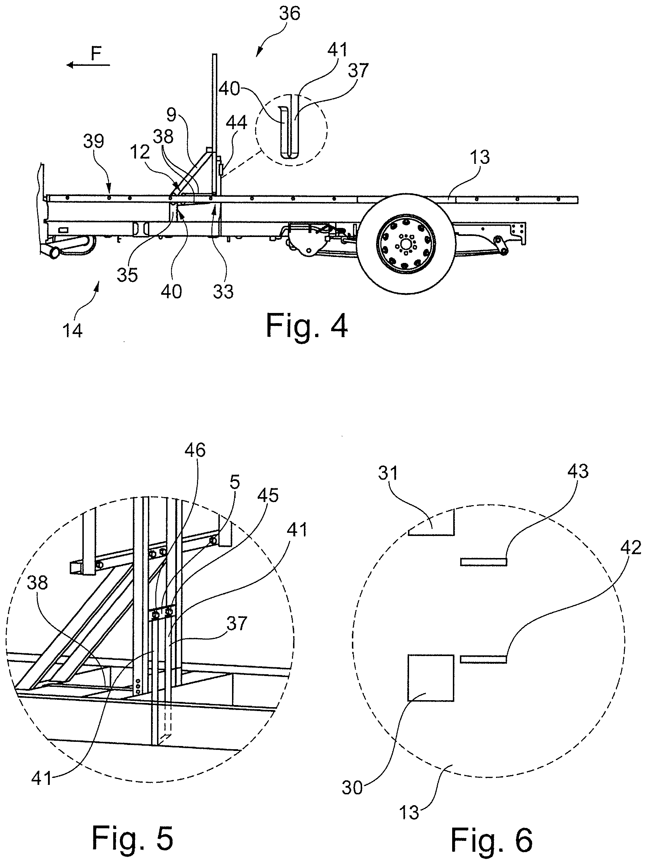

In den Figuren 4 bis 6 ist eine weitere Stützanordnung 36 am Fahrzeug 14 gezeigt. Die Stützanordnung 36 unterscheidet sich von der Stützanordnung 1 der Figuren 1 bis 3 darin, dass das Befestigungselement 37 und das Befestigungsorgan 38 der Stützanordnung 36 zum Befestigungselement 10 und zum Befestigungsorgan 11 der Stützanordnung 1 verschieden sind.

Bei der Ausführung nach der Stützanordnung 1 verläuft das Befestigungsorgan 11 entlang seiner Längsachse insbesondere durchgehend ausgehend von einem Befestigungspunkt an der Vertikalstütze 2, 3 zunächst den Fahrzeugboden 13 durchdringend nach unten und dann unterhalb des Fahrzeugbodens 13 entlang des Fahrzeugbodens 13 in Fahrtrichtung F bis zum Stützorgan 35, an welchem das Befestigungsorgan 11 mit einem zweiten Ende 34 befestigt ist. Das Befestigungsorgan 38 der Stützanordnung 36 demgegenüber verläuft z.B. ausgehend von den Vertikalstützen 2, 3 oberhalb des Fahrzeugbodens 13 entlang einer Oberseite 39 des Fahrzeugbodens 13 bis zu einem Fußbereich 12 der Fußstütze 9. Weiterhin denkbar ist, dass das Befestigungsorgan 38 mit einem ersten Ende 40 an Stützorgan 35 befestigt ist und entlang seiner Längsachse entgegen der Fahrtrichtung F unterhalb des Fahrzeugbodens 13 in Richtung Vertikalstützen 2, 3 der Stützanordnung 36 verläuft. Weiter durchdringt das Befestigungsorgan 38 am Fußbereich 33 der Vertikalstützen 2, 3 den Fahrzeugboden 13 insbesondere in vertikaler Richtung nach oben vorteilhafterweise fortlaufend. Anschließend umschließt das Befestigungsorgan 38 im Fußbereich 33 der Vertikalstützen 2, 3 ein Umlenkmittel der Stützanordnung 36, wodurch es in Fahrtrichtung F umgelenkt ist. Hierdurch verläuft es in Fahrtrichtung F entlang der Oberseite 39 des Fahrzeugbodens 13 bis zum Stützorgan 35, an welchem das Befestigungsorgan 11 mit dem zweiten Ende 34 befestigt ist (Figuren 4, 5).

Das Befestigungselement 37 der Stützanordnung 36 ist mit seinen beiden Enden 40, 41 an der zweiten Querstrebe 5 der Stützanordnung 36 befestigt. Ausgehend von der zweiten Querstrebe 5 verläuft das Befestigungselement 37 analog zum Befestigungselement 10 der Stützanordnung 1 durch den Fahrzeugboden 13 hindurch, um den Längsträger 20 des Fahrzeugrahmens 19 herum, wieder durch den Fahrzeugboden 13 hindurch, bis zur Querstrebe 5. Hierdurch ist das Befestigungselement 37 hinter den Vertikalstützen 2, 3 der Stützanordnung 36 an der Stützanordnung 36 anordenbar. Entsprechend sind die Öffnungen 42, 43, des Fahrzeugbodens 13 für das Befestigungselement 37 der Stützanordnung 36 bezogen auf die Fahrtrichtung F hinter den Footprints 30, 31 am Fahrzeugboden 13 ausgebildet (Figur 6).

Zusätzlich kann die Stützanordnung 36 bzw. das Befestigungselement 37 eine Spannmittel 44 aufweisen. Das Spannmittel 44 ist z.B. dazu ausgebildet, eine Länge des Befestigungselements 37 entlang seines Verlaufs zwischen Befestigungspunkten 45, 46 an der Querstrebe 5 zu verringern.

### Bezugszeichenliste

- 1: Stützanordnung
- 2, 3: Vertikalstütze
- 4, 5: Querstrebe
- 6, 7: Verbindungselement
- 8: Anbringmittel
- 9: Stützfuß
- 10: Befestigungselement
- 11: Befestigungsorgan
- 12: Fußbereich
- 13: Fahrzeugboden
- 14: Fahrzeug
- 15, 16: Ende
- 17, 18: Befestigungsschraube
- 19: Fahrzeugrahmen
- 20: Längsträger
- 21, 27: Ende
- 22: Außenseite
- 23 - 25: Montageelement
- 26, 28: Öffnung
- 29: Außenseite
- 30, 31: Footprint
- 32, 34: Ende
- 33: Fußbereich
- 35: Stützorgan
- 36: Stützanordnung
- 37: Befestigungselement
- 38: Befestigungsorgan
- 39: Oberseite
- 40, 41: Ende
- 42, 43: Öffnung
- 44: Spannmittel
- 45, 46: Befestigungspunkt

## Patentansprüche

1. Vorrichtung zur Anordnung eines Personenrückhaltesystems in einem Fahrzeug (14), um mit dem Personenrückhaltesystem eine in dem Fahrzeug (14) sitzende Person zu sichern, wobei die Vorrichtung eine Stützanordnung (1, 36) mit einer Vertikalstütze (2, 3) und einer Querstrebe (4, 5) umfasst, und wobei im angeordneten Zustand der Stützanordnung (1, 36) am Fahrzeug (14) die Vertikalstütze (2, 3) aufrecht stehend an einem Fahrzeugboden (13) des Fahrzeugs (14) angeordnet ist, **dadurch gekennzeichnet, dass** die Vorrichtung ein Befestigungselement (10, 37) umfasst, wobei im angeordneten Zustand am Fahrzeug (14) das Befestigungselement (10, 37) einen Träger (20) eines Fahrzeugrahmes (19) des Fahrzeugs (14) zumindest seitlich und unten umgreift, sodass im angeordneten Zustand der Stützanordnung (1, 36) am Fahrzeug (14) das Befestigungselement (10, 37) anliegend an der Stützanordnung (1, 36) befestigt ist, wobei die Stützanordnung (1, 36) durch das Befestigungselement (10, 37) an dem Fahrzeugrahmen (19) des Fahrzeugs (14) gehalten ist und wobei im angeordneten Zustand der Stützanordnung (1, 36) am Fahrzeug (14) das Befestigungselement (10, 37) ausgehend vom Träger (20) des Fahrzeugrahmens (19) den Fahrzeugboden (13) des Fahrzeugs (14) fortlaufend durchgreift.

2. Vorrichtung zur Anordnung eines Personenrückhaltesystems in einem Fahrzeug (14) nach dem vorangegangenen Anspruch 1, **dadurch gekennzeichnet, dass** das Befestigungselement (10, 37) bandartig ausgebildet ist.

3. Vorrichtung zur Anordnung eines Personenrückhaltesystems in einem Fahrzeug (14) nach einem der vorangegangenen Ansprüche, **dadurch gekennzeichnet, dass** im angeordneten Zustand am Fahrzeug (14) das Befestigungselement (10, 37) U-förmig vorhanden ist.

4. Vorrichtung zur Anordnung eines Personenrückhaltesystems in einem Fahrzeug (14) nach einem der vorangegangenen Ansprüche, **dadurch gekennzeichnet, dass** im angeordneten Zustand am Fahrzeug (14) das Befestigungselement (10, 37) schlaufenartig vorhanden ist.

5. Vorrichtung zur Anordnung eines Personenrückhaltesystems in einem Fahrzeug (14) nach einem der vorangegangenen Ansprüche, **dadurch gekennzeichnet, dass** das Befestigungselement (10, 37) mit einem Ende, insbesondere mit zwei Enden (15, 16, 40, 41), an der Vertikalstütze (2, 3) und/oder der Querstrebe (4, 5) der Stützanordnung (1, 36) befestigt ist.

6. Vorrichtung zur Anordnung eines Personenrückhaltesystems in einem Fahrzeug (14) nach einem der vorangegangenen Ansprüche, **dadurch gekennzeichnet, dass** das Befestigungselement (10, 37) an einer Seitenfläche oder an zwei Seitenflächen (22, 29) der Vertikalstütze (2, 3) angeordnet ist, wobei die Seitenflächen (22, 29) der Vertikalstütze (2, 3) sich im angeordneten Zustand der Stützanordnung (1, 36) am Fahrzeug (14) parallel zu einer Fahrtrichtung F des Fahrzeugs (14) erstrecken.

7. Vorrichtung zur Anordnung eines Personenrückhaltesystems in einem Fahrzeug (14) nach einem der vorangegangenen Ansprüche, **dadurch gekennzeichnet, dass** die Stützanordnung (1, 36) zwei oder mehr Vertikalstützen (2, 3) aufweist und wobei das Befestigungselement (10) mit einem ersten Ende (21) an einer ersten Vertikalstütze (2) und mit einem zweiten Ende (27) an einer zweiten Vertikalstütze (3) angeordnet ist.

8. Vorrichtung zur Anordnung eines Personenrückhaltesystems in einem Fahrzeug (14) nach einem der vorangegangenen Ansprüche, **dadurch gekennzeichnet, dass** im angeordneten Zustand der Stützanordnung (1, 36) am Fahrzeug (14) das Befestigungselement (37) mit einem Ende (40, 41) an der Querstrebe (5) der Stützanordnung (1, 36) angeordnet ist, wobei die Querstrebe (5) in vertikaler Richtung gesehen, senkrecht zu einer Erstreckung des Fahrzeugbodens (13) des Fahrzeugs (14), unterhalb einer Montagestelle (17, 18) der Stützanordnung (1, 36) an einer oder mehreren Vertikalstützen (2, 3) befestigt ist, wobei die Montagestelle (17, 18) zur Anordnung einer Komponente des Personenrückhaltesystems vorgesehen ist.

9. Vorrichtung zur Anordnung eines Personenrückhaltesystems in einem Fahrzeug (14) nach einem der vorangegangenen Ansprüche, **dadurch gekennzeichnet, dass** Spannmittel (44) vorhanden sind, um im angeordneten Zustand der Stützanordnung (1, 36) am Fahrzeug (14) die Stützanordnung (1, 36) über das Befestigungselement (37) mit dem Fahrzeugrahmen (19) zu verspannen.

10. Vorrichtung zur Anordnung eines Personenrückhaltesystems in einem Fahrzeug (14) nach einem der vorangegangenen Ansprüche, **dadurch gekennzeichnet, dass** die Stützanordnung (1, 36) ausgehend von einer Querstrebe (4) und/oder einer Vertikalstütze (2, 3) einen nach vorne unten verlaufenden Stützfuß (9) aufweist, wobei der Stützfuß (9) dazu ausgelegt ist, die Stützanordnung (1, 36) im angeordneten Zustand im Fahrzeug (14) nach vorne unten auf dem Fahrzeugboden (13) abzustützen, wobei die Stützanordnung (1, 36) ein Befestigungsorgan (11, 38) aufweist, welches im angeordneten Zustand der Vorrichtung am Fahrzeug (14) den Stützfuß (9) mit der verbleibenden Stützanordnung (1, 36) im Bereich des Fahrzeugbodens (13) verbindet.

11. Vorrichtung zur Anordnung eines Personenrückhaltesystems in einem Fahrzeug (14) nach Anspruch 10, **dadurch gekennzeichnet, dass** das Befestigungsorgan (11, 38) bandartig vorhanden ist.

12. Fahrzeugsitz mit einer Vorrichtung zur Anordnung eines Personenrückhaltesystems nach einem der vorangegangenen Ansprüche.

13. Fahrzeug (14) mit einer Vorrichtung zur Anordnung eines Personenrückhaltesystems nach einem der Ansprüchen 1 bis 11 und/oder einem Fahrzeugsitz nach dem Anspruch 12.

14. Fahrzeug (14) mit einer Vorrichtung zur Anordnung eines Personenrückhaltesystems und/oder einem Fahrzeugsitz nach einem der vorangegangenen Ansprüche, **dadurch gekennzeichnet, dass** der Fahrzeugboden (13) des Fahrzeugs (14) eine schlitzartige Öffnung (26, 28, 42, 43) aufweist, durch welche das Befestigungselement (10, 37) und/oder das Befestigungsorgan (11, 38) im angeordneten Zustand hindurchgreift.

## Claims

1. Device for arranging a passenger restraint system in a vehicle (14), for securing a person sitting in the vehicle (14) with the passenger restraint system, wherein the device comprises a support arrangement (1, 36) with a vertical support (2, 3) and a cross member (4, 5), and wherein in the arranged state of the support arrangement (1, 36) on the vehicle (14) the vertical support (2, 3) is arranged upright on a base (13) of the vehicle (14), **characterised in that** the device comprises a fastening element (10, 37), wherein in the arranged state on the vehicle (14) the fastening element (10, 37) grips around a support (20) of a frame (19) of the vehicle (14) at least on the sides and at the bottom, so that in the arranged state of the support arrangement (1, 36) on the vehicle (14) the fastening element (10, 37) is fixed bearing on the support arrangement (1, 36), wherein the support arrangement (1, 36) is held by the fastening element (10, 37) on the frame (19) of the vehicle (14) and wherein in the arranged state of the support arrangement (1, 36) on the vehicle (14) the fastening element (10, 37) originating from the support (20) of the vehicle frame (19) grips continuously through the base (13) of the vehicle (14).

2. Device for arranging a passenger restraint system in a vehicle (14) according to the preceding claim 1, **characterised in that** the fastening element (10, 37) is designed to be strap-like.

3. Device for arranging a passenger restraint system in a vehicle (14) according to any of the preceding claims, **characterised in that** in the arranged state on the vehicle (14) the fastening element (10, 37) is U-shaped.

4. Device for arranging a passenger restraint system in a vehicle (14) according to any of the preceding claims, **characterised in that** in the arranged state on the vehicle (14) the fastening element (10, 37) is arranged in the form of a loop.

5. Device for arranging a passenger restraint system in a vehicle (14) according to any of the preceding claims, **characterised in that** the fastening element (10, 37) with one end, in particular with two ends (15, 16, 40, 41), is fixed to the vertical support (2, 3) and/or the cross member (4, 5) of the support arrangement (1, 36).

6. Device for arranging a passenger restraint system in a vehicle (14) according to any of the preceding claims, **characterised in that** the fastening element (10, 37) is arranged on a side face or on two side faces (22, 29) of the vertical support (2, 3), wherein the side faces (22, 29) of the vertical support (2, 3) extend in the arranged state of the support arrangement (1, 36) on the vehicle (14) parallel to a travelling direction F of the vehicle (14).

7. Device for arranging a passenger restraint system in a vehicle (14) according to any of the preceding claims, **characterised in that** the support arrangement (1, 36) has two or more vertical supports (2, 3) and wherein the fastening element (10) is arranged with a first end (21) on a first vertical support (2) and with a second end (27) on a second vertical support (3).

8. Device for arranging a passenger restraint system in a vehicle (14) according to any of the preceding claims, **characterised in that** when the support arrangement (1, 36) is in an arranged state on the vehicle (14) the fastening element (37) is arranged with one end (40, 41) on the cross member (5) of the support arrangement (1, 36), wherein the cross member (5) as viewed in vertical direction is secured perpendicular to an extension of the base (13) of the vehicle (14), underneath a mounting point (17, 18) of the support arrangement (1, 36) on one or more vertical supports (2, 3), wherein the mounting point (17, 18) is provided for the arrangement of a component of the passenger restraint system.

9. Device for arranging a passenger restraint system in a vehicle (14) according to any of the preceding claims, **characterised in that** tensioning means (44) are provided so that when the support arrangement (1, 36) is in an arranged state on the vehicle (14) the support arrangement (1, 36) is tensioned via the fastening element (37) to the vehicle frame (19).

10. Device for arranging a passenger restraint system in a vehicle (14) according to any of the preceding claims, **characterised in that** the support arrangement (1, 36) has a support foot (9) running towards the front and downwards originating from a cross member (4) and/or a vertical support (2, 3), wherein the support foot (9) is configured in the arranged state in the vehicle (14) to support the support arrangement (1, 36) towards the front and downwards on the vehicle base (13), wherein the support arrangement (1, 36) comprises a fixing device (11, 38) which when the device is an arranged state on the vehicle (14) connects the support foot (9) to the remaining support arrangement (1, 36) in the region of the vehicle base (13).

11. Device for arranging a passenger restraint system in a vehicle (14) according to claim 10, **characterised in that** the fixing device (11, 38) is strap-like.

12. Vehicle seat with a device for arranging a passenger restraint system according to any of the preceding claims .

13. Vehicle (14) with a device for arranging a passenger restraint system according to any of claims 1 to 11 and/or a vehicle seat according to claim 12.

14. Vehicle (14) with a device for arranging a passenger restraint system and/or a vehicle seat according to any of the preceding claims, **characterised in that** the base (13) of the vehicle (14) has a slot-like opening (26, 28, 42, 43) through which the fastening element (10, 37) and/or the fixing device (11, 38) extend(s) in the arranged state.

## Revendications

1. Dispositif pour le montage d'un système de retenue de passagers dans un véhicule (14) afin de sécuriser une personne assise dans le véhicule (14) avec le système de retenue de passager, le dispositif comprenant un dispositif support (1, 36) avec un support vertical (2, 3) et une entretoise (4, 5), et le support vertical (2, 3) étant, à l'état monté du dispositif support (1, 36) sur le véhicule (14), dressé verticalement sur un plancher de véhicule (13) du véhicule (14), **caractérisé en ce que** le dispositif comprend un élément de fixation (10, 37), l'élément de fixation (10, 37) entourant, à l'état monté sur le véhicule (14), un support (20) d'un châssis de véhicule (19) du véhicule (14) au moins latéralement et en dessous, de sorte qu'à l'état monté du dispositif support (1, 36) sur le véhicule (14), l'élément de fixation (10, 37) est fixé en appui sur le dispositif support (1, 36), le dispositif support (1, 36) étant maintenu par l'élément de fixation (10, 37) sur le châssis de véhicule (19) du véhicule (14), et, à l'état monté du dispositif support (1, 36) sur le véhicule (14), l'élément de fixation (10, 37) traversant de façon continue le plancher de véhicule (13) du véhicule (14) en partant du support (20) du châssis de véhicule (19) du véhicule.

2. Dispositif pour le montage d'un système de retenue de passagers dans un véhicule (14) selon la revendication 1 précédente, **caractérisé en ce que** l'élément de fixation (10, 37) est réalisé sous la forme d'une bande.

3. Dispositif pour le montage d'un système de retenue de passagers dans un véhicule (14) selon l'une des revendications précédentes, **caractérisé en ce que** l'élément de fixation (10, 37), à l'état monté sur le véhicule (14), se présent sous la forme d'un U.

4. Dispositif pour le montage d'un système de retenue de passagers dans un véhicule (14) selon l'une des revendications précédentes, **caractérisé en ce que** l'élément de fixation (10, 37), à l'état monté sur le véhicule (14), se présente sous la forme d'une boucle.

5. Dispositif pour le montage d'un système de retenue de passagers dans un véhicule (14) selon l'une des revendications précédentes, **caractérisé en ce que** l'élément de fixation (10, 37) est fixé par une extrémité, en particulier par deux extrémités (15, 16, 40, 41), au support vertical (2, 3) et/ou à l'entretoise (4, 5) du dispositif support (1, 36).

6. Dispositif pour le montage d'un système de retenue de passagers dans un véhicule (14) selon l'une des revendications précédentes, **caractérisé en ce que** l'élément de fixation (10, 37) est disposé sur une surface latérale ou sur deux surfaces latérales (22, 29) du support vertical (2, 3), les surfaces latérales (22, 29) du support vertical (2, 3), à l'état monté du dispositif support (1, 36) sur le véhicule (14), s'étendant parallèlement à une direction de déplacement F du véhicule (14).

7. Dispositif pour le montage d'un système de retenue de passagers dans un véhicule (14) selon l'une des revendications précédentes, **caractérisé en ce que** le dispositif support (1, 36) est muni de deux ou plusieurs supports verticaux (2, 3) et l'élément de fixation (10) est disposé avec une première extrémité (21) sur un premier support vertical (2) et avec une deuxième extrémité (27) sur un deuxième support vertical (3).

8. Dispositif pour le montage d'un système de retenue de passagers dans un véhicule (14) selon l'une des revendications précédentes, **caractérisé en ce qu'**à l'état monté du dispositif support (1, 36) sur le véhicule (14), l'élément de fixation (37) est disposé avec une extrémité (40, 41) sur l'entretoise (5) du dispositif support (1, 36), l'entretoise (5), considérée en direction verticale, perpendiculairement à une extension du plancher de véhicule (13) du véhicule (14), est fixée à un ou plusieurs supports verticaux (2, 3) en dessous d'un point de montage (17, 18) du dispositif support (1, 36) le point de montage (17, 18) étant prévu pour le montage d'un composant du système de retenue des passagers.

9. Dispositif pour le montage d'un système de retenue de passagers dans un véhicule (14) selon l'une des revendications précédentes, **caractérisé en ce que** des moyens tendeurs (44) sont prévus pour haubaner le dispositif support (1, 36), à l'état monté du dispositif support (1, 36) sur le véhicule (14), au châssis du véhicule (19) par l'intermédiaire de l'élément de fixation (37).

10. Dispositif pour le montage d'un système de retenue de passagers dans un véhicule (14) selon l'une des revendications précédentes, **caractérisé en ce que** le dispositif support (1, 36) est muni d'un pied support (9) s'étendant, depuis une traverse (4) et/ou un support vertical (2, 3), vers l'avant et vers le bas, le pied support (9) étant conçu pour soutenir le dispositif support (1, 36), à l'état monté dans le véhicule (14), vers l'avant et vers le bas sur le plancher de véhicule (13), le dispositif support (1, 36) étant muni d'un organe de fixation (11, 38) qui, à l'état monté du dispositif sur le véhicule (14), relie le pied support (9) au reste du dispositif support (1, 36) au niveau du plancher de véhicule (13).

11. Dispositif pour le montage d'un système de retenue de passagers dans un véhicule (14) selon la revendication 10, **caractérisé en ce que** l'organe de fixation (11, 38) se présente sous la forme d'une bande.

12. Siège de véhicule avec un dispositif pour le montage d'un système de retenue de passagers selon l'une des revendications précédentes.

13. Véhicule (14) avec un dispositif pour le montage d'un système de retenue de passagers selon l'une des revendications 1 à 11 et/ou avec un siège de véhicule selon la revendication 12.

14. Véhicule (14) avec un dispositif pour le montage d'un système de retenue de passagers et/ou avec un siège de véhicule selon l'une des revendications précédentes, **caractérisé en ce que** le plancher de véhicule (13) du véhicule (14) présente une ouverture en forme de fente (26, 28, 42, 43) à travers laquelle s'engage(nt) l'élément de fixation (10, 37) et/ou l'organe de fixation (11, 38) à l'état monté.
